Europäisches Patentamt

European Patent Office

Office européen des brevets

(19)

(11) Publication number: **0 086 501**
**B1**

(12)

# EUROPEAN PATENT SPECIFICATION

(45) Date of publication of patent specification: **04.06.86**

(51) Int. Cl.⁴: **B 32 B 18/00,** B 32 B 7/00

(21) Application number: **83101706.6**

(22) Date of filing: **29.02.80**

(80) Publication number of the earlier application in accordance with Art. 76 EPC: **0 016 971**

(54) **Composite ceramic material.**

(30) Priority: **02.03.79 US 17154**
**02.03.79 US 16871**

(43) Date of publication of application:
**24.08.83 Bulletin 83/34**

(45) Publication of the grant of the patent:
**04.06.86 Bulletin 86/23**

(84) Designated Contracting States:
**AT CH DE FR GB IT SE**

(56) References cited:
**DE-A-2 325 100**
**DE-B-2 639 522**
**US-A-3 770 044**
**US-A-3 885 005**
**US-A-3 889 029**

(73) Proprietor: **Blasch Precision Ceramics, Inc.**
**99 Cordell Road**
**Schenectady New York 12304 (US)**

(72) Inventor: **Smith-Johannsen, Robert**
**Barry Capital Mangt., Suite 260, 2 Palo Alto Sq.**
**Palo Alto Calif. 94304 (US)**
Inventor: **Blasch, Earl Bernard**
**53 Nicholas Drive**
**Albany, N.Y. (US)**

(74) Representative: **Hansen, Bernd, Dr.rer.nat. et al**
**Hoffmann, Eitle & Partner Patentanwälte**
**Arabellastrasse 4**
**D-8000 München 81 (DE)**

Courier Press, Leamington Spa, England.

## Description

The invention relates to a composite ceramic material composed of a laminate of at least two different fired ceramic bodies in which at least one ceramic body material has a different coefficient of expansion from the material of at least one other body.

Freezing a slurry of particulate inorganic materials to form refractory products has been disclosed in U.S. Patents Nos. 3,177,161; 3,512,571; 3,816,572 and 3,885,005.

US—A—3 889 029 and 3 770 044 describe a composite ceramic structure composed of a laminate of at least two fired ceramic bodies in which at least one ceramic body material has a different coefficient of expansion, and wherein each body has a void volume sufficient to permit expansion of the individual ceramic particles. The product obtained according to the invention differs from the structures known from above US—A—3 889 029 and 3 770 044 in that it is produced by a method which results in a relatively high void volume. This void volume permits expansion of the individual ceramic particles to a much higher extent than the void volume of the known polar structures.

The production of refractory structures in accordance with the prior art resulted in products which often contain large voids which adversely affect the strength of the ceramic product, which in turn adversely affects their properties such as thermal conductivity and thermal shock resistance.

These deficiencies in the resulting ceramic products are believed to be caused by nucleation at one of the cooling surfaces due to contact with an ice crystal or with the mold surface that has a nucleation temperature higher than that of the slurry itself as the dispersion is cooled to its freezing point. This nucleation is believed to cause large ice crystals to grow out from these points and eventually entrap the last remaining liquid, resulting in rupture, cracking, weak, and non-uniform ceramic structures.

Many attempts have been made to overcome this problem, such as thorough waxing of the molds, the use of different mold materials, thorough cleaning of mold surfaces, even with acids, but the problems still persisted.

The invention relates to a composite ceramic material composed of a laminate of at least two different fired ceramic bodies in which at least one ceramic body material has a different coefficient of expansion from the material of at least one other body, and is characterized in that each ceramic body has a void volume sufficient to permit expansion of the individual ceramic particles making up such body in accordance with its own coefficient of expansion, said composite ceramic material being produced in a single mold by inserting the different ceramic bodies, which are composed of a ceramic material and a freeze-sensitive colloidal ceramic sol, into the mold in layered fashion and in contact with each other, supercooling respective layers and freezing the layered ceramics while in contact with each other, thawing the frozen composite, and then firing the thawed composite.

The composite ceramic material according to the invention may also be prepared—instead of supercooling said layers of ceramic material—by the addition of lithium ions to each different ceramic material to obtain small ice crystals.

The various inorganic particles that can be used include, without limitation, aluminas such as mullite and tabular alumina, silicas such as fused silica, magnesia, chromite, spinels such as chromite spinel, kyanite, carbomul, zirconia, mica, carbon, graphite, molydisulfide, uranium oxide, thoria, titania, clays, etc. The invention, however, is broadly applicable to suspensions of inorganic particles in general including other metal compounds. Mixtures may be used if desired.

The inorganic particle size is not critical. Best results seem to have been obtained to date when the majority of the particles, or 40—50% of them, are below about 0,074 mm. Small particle or grain size seems to be particularly advantageous when using zironia. Much smaller particle sizes can also be used even in a colloidal size. The ultimate particle size and size distribution will depend to some extent on the end use of the structures and the properties desired therein.

The inorganic products according to this invention are porous and the size of the grains or particles employed in the slurries will to a large extent determine the degree of porosity. The products of the invention have a wide variety of uses depending to some extent on the type of particle being employed in the process. For example, if ceramic particles are employed, the products can be used in the same manner as ceramic and refractories are used such as fire brick, linings for furnaces in the steel, glass and other industries. They can also be used as filters, carriers for catalysts, thermal shock resistant dinnerware, grinding wheels, etc. When particles such as graphite and molydisulfide are employed their uses can include many of the above but adding thereto the lubrication properties of these materials. Generally the products are useful in any area where porosity is desired or in areas where porosity is not desired but is not detrimental.

The freeze-sensitive colloidal ceramic sols useful according to this invention are well known and include colloidal ceramic sols, such as disclosed in the Smith-Johannsen U.S. Patent 3,177,161 and U.S. Patents 3,512,571 to Phelps, 3,816,572 to Roelofs and 3,885,005 to Downing et al. A freeze-sensitive sol is one which, when frozen, will break down and no longer exist as a sol or colloidal suspension when thawed. Both cationic and anionic silica sols can be used with the anionic preferred at least with alumina and zirconia refractories. Ammonia stabilized silica sols, such as Dupont's AM LUDOX®, may be advantageous where elimination of sodium is desired. Other freeze-sensitive colloidal ceramic sols, such as zirconia and magnesia sols, can also be used. Silica sols have been used because they are readily available on the market. Although not necessarily preferable due to insufficient experimental data to date, most present experiments mainly utilize a freeze-sensitive sodium stabilized colloidal silica sol having about 30% colloidal silica supplied by Nalco Chemical Company.

The total amount of sol stabilizer such as sodium ammonium and/or lithium should be sufficient to stabilize the sol but not be so high as to render the sol non-freeze sensitive or to lower the strength of the fired silica or other ceramic contained in the sol when fused or fired or to lower the strength of the fused or fired product to an unacceptable level. This can readily be determined by routine experimentation by one skilled in the art. For example a mole ratio of silica to lithia of about 85 in a lithium stabilized silica sol works quite well but when the ratio is lowered to about 48 the sol appears to lose some freeze sensitivity resulting in weaker bonds. The optimum amounts have not as yet been determined.

Generally, the sodium stabilized silica sol are quite adequate to practice the invention disclosed herein. With some inorganic particles, namely sirconia and magnesia, some adjustments can be made to improve the results. These adjustments are desirable to improve pot life and to preserve the distribution of particle sizes during the filling operation so that an optimum degree of uniform packing can be obtained.

When zirconia, for example is mixed with a negatively charged sodium stabilized silica sol (DuPont Ludox HS-40®) it is well wetted and the particles quickly segregate. It is believed that this segregation occurs because the sol particles and the zirconia particles are so charged to prevent or minimize particle association. The zirconia particles generally have a charge of about −20 m.v. (zeta potential) in deionized water while the above Ludox particles are even more highly charged. To overcome particle segregation problem, the zeta potential of the particles comprising the various mixes can be altered.

One way of altering the zeta potential is to reduce the pH of the above Ludox from about 10 to about 8 by adding dilute HCl which lowers the zeta potential of the silica sol particles and rendering them less stable. Under these conditions, the silica particles begin to precipitate onto the ceramic (zirconia) particles creating a degree of association between all of the particles of the mix and segregation of coarse and fine ceramic particles such as zirconia is greatly inhibited. The acid can also be added to the inorganic particles or to a mixture of the sol and particles. The amount of acid is that which is sufficient to prevent settling or segregation of the particles. In practice, it is advantageous to add the acid directly to the sol. With zirconia, the amount of acid found practical to accomplish the result is about 0.6 percent by weight (based on the total weight of zirconia) of a 37 percent HCl solution. If such a problem is encountered with other inorganic particles the zeta potential can be measured and appropriate adjustment with acid or alkali to alter the zeta potential can be made in such a manner as to ensure particle association.

Zirconia, and especially magnesia, also appear to react with the sodium stabilizer (and also ammonia somewhat) to cause limited pot life. In fact, the reaction with magnesia is so rapid that mixing itself becomes difficult. The use of a lithium stabilized silica sol was found to eliminate this reaction to the extent that magnesia dispension could be readily mixed and cast without concern of short pot life. The use of lithium stabilized sols also overcomes the particle segregation problem referred to above with respect to zirconia. Thus it may not be necessary to adjust the zeta potentials of the particles if a sol having the requisite zeta potential can initially be used.

When the lithium stablized silica sol was used with magnesia and zirconia another new and very significant property was observed. These sols inhibited ice crystal growth even in the absences of supercooling. In fact, when nucleation was deliberately initiated, in the case of magnesia dispersion containing lithium ions, from the surface with an ice crystal, no macro or large crystal growth was detectable for more than two millimeters from the initiation site. Thus the use of lithium stabilized ceramic sols not only solved the pot life problems and particle segregation problems of zirconia and magnesia but has been found extremely advantageous for producing small uniform ice crystals during the freezing step with regard to all inorganic dispersions. The use of a lithium stabilized ceramic sol in combination with supercooling has been found most advantageous.

When using lithium in the inorganic particle slurries containing a freeze sensitive ceramic sol, it is of course most practicable to employ a lithium stabilized ceramic sol available on the market. A silica sol having a silica to lithia ratio of 85 worked quite well, however this sol, DuPont's Lithium Polysilicate 85®, is not being marketed today. One lithium stabilized silica sol which is available today contains a silica to lithia ratio of about 48 (DuPont's Lithium Polysilicate 48®). This amount of lithia however minimizes the freeze sensitivity of the sol and when used alone produced fired products having weaker bonds. This commercial lithium stabilized sol can be used however by using it in admixture with a sodium or preferably an ammonia stabilized sol. A 50-50 mixture has worked well but the optimum has not as yet been determined. It is the presence of the lithium ion which produces the surprising ice crystal growth inhibition rather than the absence of sodium or ammonia. Thus lithium ions can be added to the slurries by the addition of ionizable lithium compounds such as lithium chloride, lithium hydroxide, lithium sulfate, lithium succinate and so forth. It is preferred to add the lithium ions to the ceramic sol. The amount of lithium ions added to an inorganic particle slurry should by sufficient to inhibit ice crystal growth to the desired degree but insufficient to adversely affect the freeze sensitivity of the sol. This can be determined by routine experimentation with respect to any particular system being frozen. Only a very small amount of lithium ion is necessary to inhibit ice crystal growth. Higher amounts may however be required to increase the pot life when magnesia is used as can be observed in Examples below.

To accomplish the supercooling and substantial instantaneous freezing, it is not a simple matter of inserting a mold filled with the slurries into a cold freezing media even at −40 or −51.11°C. This invention includes a process of insuring supercooling of the ceramic slurries by treating the mold with a hydrophobic liquid such as xylene, mineral spirits, or perchloroethylene to cover at least the entire working surface of the mold, and inserting the slurries or suspensions into the mold while it is still wet. This can be accomplished by simply dipping the mold in the hydrophobic liquid. The mold can then be closed and the slurry frozen. It is also advantageous to cover the aqueous slurry or suspension in the mold with a thin layer of the hydrophobic liquid. The mold itself is preferably of light weight and of low mass relative to the freezing media and the ceramic or particulate slurry being frozen. The mold and freezing media should also have a high thermal conductivity. Although the freezing temperature can be varied, it should be sufficiently low to insure supercooling and a rapid freeze. Temperature of about −42,78 to −45,56°C can be used. When lithium is used temperatures of about −23,33°C can advantageously be used.

When producing large articles, supercooling may only occur to a certain depth from the mold surface toward the center of the slurry because all of the heat within the center cannot be removed before freezing of a portion of the slurry closer to the mold. When large articles are to be made it is thus advantageous to cool the entire slurry to near the freezing point before inserting it into the freezing media to insure complete supercooling. The presence of lithium ions in large slurries is also advantageous.

The supercooling can also be carried out without the use of mold such as by extruding cylinders, sheets or films of the aqueous slurry or suspensions on a belt treated with the hydrophobic liquid and then into the hydrophobic freezing media. The transport through the feezing media can be between a pair of belts and the process can be continuous. The terms "mold" as used herein is intended to include any structure for supporting and/or encompassing the slurries or suspensions.

Supercooling of the slurry to a temperature where it spontaneously nucleates results in a structure that is uniform throughout. At the time of nucleation not all the water freezes because the heat of fusion raises the temperature back to the freezing point. However, as cooling proceeds further, ice crystal growth is completed from all of these nucleation sites at substantially the same time. The structure that develops is therefore much more uniform and fine grained regardless of the thickness of the structure to be produced or frozen.

Random tests made on some of the freezing steps set forth herein indicate that the temperature of supercooling is about 4 degrees below the freezing temperatures of the aqueous slurry.

Various freezing media can be used to freeze the slurry structures such as those described in the above-mentioned patents. A hydrophobic freezing media such as freon or perchloroethylene is advantangeously used to prevent penetration of the freezing media into the agueous slurries to prevent the growth of large or variable sized ice crystals, and to ensure supercooling.

The various inorganic materials or ceramics useful according to this invention have different and known firing or sintering temperatures in conventional refractory processes. For example, alumina is generally fired at a temperature of 1400°C or slightly above, and zirconia at about 1700°C, in conventional refractory processes. As a general rule, freeze-cast ceramics are most advantageously fired at about 50% to 65% of their melting temperature. Thus, when firing freeze-cast ceramics, alumina is advantageously fired at about 1250°C while zirconia is advantageously fired at about 1400°C.

Other inorganic structures can be sintered at their known or determined sintering temperatures. The temperature used and time of heating should be sufficient to bond the particles together into a strong integral structure but insufficient to significantly reduce or adversely affect the desired porosity or uniformity of the product. Examples of such temperatures are given, for example, in U.S. Patent 3,177,161.

The molds or patterns are usually made of lightweight steel or aluminium if more thermal conductivity is desired. The wetting of a mold with a hydrophobic liquid to aid in supercooling can also act as a release agent.

The slurries should be as free from entrapped air as practical. Entrapped air can be avoided to some extent in the manner by which the slurries are first mixed, and any entrapped air can be removed in various known manners, such as using long periods of holding time, vibration, or vacuum treatment techniques.

After freezing, the frozen slurry structures are removed from the mold, thawed and dried. Although various manners of thawing and drying can be employed, the thawing and drying can be accelerated by the use of heat. The use of a conventional drying oven has been found satisfactory for this purpose.

After selection of the specific particles to be formed into a structure, they can be mixed in the conventional manner having due regard to particle size, and the freeze-sensitive colloidal ceramic added to each of the dried ceramic materials selected. The freeze-sensitive colloidal ceramics are contained in water and the solid colloidal content may range from 15% to 50% solids. Thus, the addition of the freeze-sensitive colloids to the dried ceramic material usually automatically adds the necessary water for handling. For example, a mix commonly used in slip casting containing up to about 10% water, having a consistency somewhat like pancake batter can be poured into a mold or injected by simple means. This can readily be accomplished by maintaining the proper consistency of the ceramic slurries either by using high solid content freeze-sensitive colloidal ceramic sol or by removing water prior to freezing. One manner of accomplishing this mixing is to dry mix the ceramic grain in a ribbon blender and add the freeze-sensitive ceramic sol together with its liquid component, slowing the ribbon blender and continuing until thorough mixing is obtained. The particulate suspensions or slurries, should have a particle content sufficient to ensure particle to particle contact during the freezing step as described in U.S. patent 3,177,161. If the particles are dispersed too thinly, no structure will be formed when the ice melts. The amount of water is desirably held to a minimum practical amount for economic reasons.

The amount of the freeze-sensitive ceramic sol can be as reported in the above-noted U.S. patents. The most suitable percentage appears to be about 15% by weight of the colloidal ceramic sol (30% solids) based on the weight of the dried inorganic particles.

Composite inorganic structures such as ceramics, can be considered as being in the nature of laminates where one inorganic structure, such as a zirconia plate, is adhered to a different structure, such as an alumina plate. Prior attempts to produce such composite ceramics by simultaneous firing of the ceramics in a single mold or by firing the ceramics separately and cementing them together have not been successful to applicant's knowledge. The interfacial bonds between the different ceramics obtained in these manners have not been adequate to withstand the high temperatures and thermal shock to which they are frequently subjected. This interfacial bond failure is mainly due to the differences in the thermal coefficients of expansion of the different refractories or ceramics. A further problem involved in producing composite ceramics is the difference in the firing temperatures required of the different ceramic meterials.

The composite inorganic articles of this invention, particularly ceramics, are composed of different inorganic materials adhered or laminated together and having an interfacial bond of extraordinary strength sufficient to withstand extremely high temperatures of thermal shock, such as experience in the metals industry. Composite ceramics produced according to this invention have been subjected to temperatures as high as 3316°C without any noticeable effect on the interfacial bonds.

The composite ceramic can be produced in a single mold by inserting the different ceramic materials into the mold in layered fashion and in contact with each other, freezing the layered ceramics while in contact with each other, thawing the frozen composite, and then firing the thawed composite.

There are a number of important and surprising results obtained with composite ceramic articles according to this invention. The bond between the two different ceramics is at least as strong as the bond between the particles of the individual ceramics employed. The composite frozen structure can be fired at a single temperature despite the fact the ceramics individually are known to require different firing temperatures. The differences in the thermal coefficients or the mass thermal coefficients of expansion of the different ceramics does not cause disruption or weakening of the interfacial freeze bonding during the firing operation and the fired bond is not significantly affected during high temperature use or by subjecting the composite ceramic to extreme thermal shock. It is further surprising that experiments to date indicate that a very wide range of different ceramics can be employed to make the composite ceramics of this invention having wide differences in their firing temperatures and thermal coefficients of expansion.

The thermal coefficient of expansion refers to the expansion of the individual particles or crystals of the refractory. When these particles are bonded or sintered together in a mass and heat is applied, it is the individual particles that expand causing the dimensions of the entire mass to change due to the cumulative effect of the expansion of the individual particles. This phenomenon is referred to herein as the mass thermal coefficient of expansion.

When refractories are prepared by the conventional process, they act as a single body and when the body is subjected to heat the entire body expands due to the cumulative effect of the individual particles or crystals making up the body. In the composites of this invention, the body acts as individual particles and although the individual particles or crystals expand when the body is heated, the body itself does not change dimensions to any significant extent, and has, in effect, a very low mass coefficient of expansion.

Although many different inorganic materials can be used to form composites, some of the more commercially important composites are ceramic or refractory composites such as zirconia-alumina, zircon-alumina, magnesia-alumina, silica-alumina, zircon-silica, zirconia-magnesia and zircon-magnesia composites, The zirconia-alumina composite, for example, is particularly valuable to the steel industry. Zirconia has a low thermal conductivity when compared to alumina, and is very corrosive and errosive resistant to molten steel. Zirconia, however, is not very strong when compared to alumina (especially in its soft form) and is also much more expensive than alumina. Thus, a zirconia-alumina composite brick or slab having about one-quarter inch (6,3 mm) of zirconia adhered to one side of two to three inches (76,2 mm) of alumina gives a product of high strength and at a significantly reduced cost while retaining all of the advantages of zirconia in its most desirable soft form. The advantages of other combinations of ceramics will depend somewhat upon their intended use and variations can be produced to meet the requirements of any particular end use. Alumina is presently preferred as a basic ceramic to which other ceramics are bonded because it is inexpensive, strong, easy to work with, and has a convenient firing temperature.

Various shapes can be produced; for example, alumina can be faced on one or more sides with zirconia or magnesia, the internal surface of alumina cylinders can be lined with zirconia, alumina nozzles and ladles can be lined with zirconia and so forth.

In firing the composite ceramics, it has been found to be advantageous to fire at a temperature for the ceramic having the lower firing temperature. For example, when firing a composite composed of alumina and zirconia, it has been found advantageous to fire it at about 1250°C. Such a firing temperature, however, is below that normally used for circonia and also below that which is used for firing the individually freeze-cast zirconias, namely 1400°C. When firing such a composite at 1250°C, the zirconia would normally be considered as somewhat under-fired. Soft zirconia is even more corrosive and errosive resistant to molten uranium than hard zirconia fired at its normal temperature; and the fact that the zirconia is bound or adhered to the aulumina renders the composite as a whole very strong, thus permitting one to take maximum advantage of the properties of zirconia while maintaining excellent strength. If desired, the zirconia portion of such a substance could be locally fired to increase its hardness.

The formation of the composite structures can take place in a single mold. The different ceramics are formed into slurries containing the freeze-sensitive colloidal ceramic sols. One ceramic slurry can then be placed at the bottom of the mold and the different ceramic slurry placed on top thereof, the composite frozen, thawed, and subsequently fired. To prevent any substantial mixing of the different ceramics, the slurries can be formed in a viscous state or other techniques can be used to prevent significant mixing, such as inserting a thin separating slip or shield between the ceramic slurries and pouring the other slurry on top or on the other side of the slip to temporarily effect a physical separation of the different slurries and then removing the separating slip just prior to the freezing of the slurries.

Example 1
Laminate Zirconia-Alumina
(28 cm melting crucible)
Alumina Mix (15 kilograms)
Tabular Alumina Alcoa T61 (Trade Name)

| | |
|---|---|
| −0,595 mm +0,297 mm | 55% |
| −0,149 mm | 25% |
| −0,044 mm | 20% |

Sol 30% solids Colloidal Silica (NALCO)  pH about 10   14.3% by weight

Zirconia Mix (7 kilograms)
Monoclinic Zirconia

| | |
|---|---|
| −0,149 mm | 50% |
| −0,044 mm | 50% |

Sol 30% solids Colloidal Silica (NALCO)   12.4% by weight

Modified by 0.6% HCL. to pH 7.5

Example 2
Laminated Zircon-Alumina (plate)
Alumina Mix (1060 grams)
Tabular Alumina Alcoa T61

| | |
|---|---|
| −0,595 mm +0,297 mm | 55% |
| −0,149 mm | 25% |
| −0,044 mm | 20% |

Sol 30% solids Colloidal Silica (NALCO) pH about 10   14.3% by weight

Zircon (600 grams)

| | |
|---|---|
| −0,177 mm | 70% |
| −0,044 mm | 30% |

Sol 30% solids Silica (NALCO) pH about 10   11.7% by weight

Example 3
Laminated Alumina & Mullite (plate)
Tabular Alumina Alcoa T61 (300 grams)

| | |
|---|---|
| −1,19 mm | 40% |
| −0,297 mm | 44% |
| −0,044 mm | 16% |

Sol 30% Silica (NALCO), ph about 10   14.7% by weight

Mullite-Remasil #60 (89 grams)

| | |
|---|---|
| −0,841 mm | 30% |
| −0,210 mm | 30% |
| −0,074 mm | 30% |
| −0,044 mm | 10% |

Sol 30 % Silica (NALCO),
pH about 10    .    14.6% by weight

The above mixes were thoroughly blended and each mix had the consistency of thick pancake batter and could be poured and placed in a mold with the aid of a spatula. The molds were thoroughly waxed and highly polished. The zirconia mix was first placed in each mold to the desired depth, about 0.63 cm in these examples, and the alumina, zircon, and mullite in each of the above examples placed in the same molds on top of the zirconia to a depth of about 5.08 cm. The top layers of alumina, zircon and mullite are each then covered with a layer of hydrophobic freezing liquid, the molds closed and molds inserted entirely in perchloroethylene freezing liquid at a temperature of −44.44°C.

The frozen composite bodies were then removed from the mold while frozen, thawed and dried in a radiant heated oven at a temperature of about 48.89°C. After drying the composite bodies were each fired in a conventional kiln at a temperature of 1250°C for about 4 hours, after which the moldings were allowed to slowly cool to ambient temperature. The moldings were then subjected to heat and thermal shock by applications of a 1648.89°C torch directly to the moldings at ambient temperature. The moldings remained substantially unaffected after the application of heat with no visible or physical effect on the interfaced bonds. The zirconia-alumina composite was also hit with a gas torch at about 3315.55°C with no apparent damage to the interfacial bond although it melted the alumina.

Example 4

Example 1 was repeated using a mold previously immersed in perchloroethylene and the mold filled while still wet. Supercooling occurred quite readily when the composite ceramics were inserted into the freezing liquid and a fine uniform grained composite structure obtained.

Example 5

Example 4 was repeated substituting for the NALCO, a 50-50 mixture of the sodium stabilized NALCO silica sol and a 30 percent solids lithium stabilized silica sol having a silica-lithia ratio of about 48.

Example 6

Example 1 was repeated in which about 0.6 percent by weight a 3.7 percent HCl solution based on the weight of the zirconia was added to the zirconia grains and about 15.6 percent by weight of the NALCO silica sol (30% solids) having a pH of about 10 was used. The amount of acid used is about the same amount that would be required to bring the pH of the sodium stabilized silica sol to about 7—8.

Example 7

60 parts by weight of magnesia (50% −1,19 mm and 50% −0,297 mm) were mixed with 12 parts by weight of a lithium stabilized 30% aqueous silica sol having a silica-lithium ratio of 85, formerly marketed by DuPont under the designation Lithium Polysilicate 85. The mixture was supercooled and frozen in the same manner as set forth in the above examples. No initial reaction was noted and the pot life of the mix was very good.

**Claims**

1. A composite ceramic material composed of a laminate of at least two different fired ceramic bodies in which at least one ceramic body material has a different coefficient of expansion from the material of at least one other body, characterized in that each ceramic body has a void volume sufficient to permit expansion of the individual ceramic particles making up such body in accordance with its own coefficient of expansion, said composite ceramic material being produced in a single mold by inserting the different ceramic bodies, which are composed of a ceramic material and a freeze-sensitive colloidal ceramic sol, into the mold in layered fashion and in contact with each other, supercooling respective layers and freezing the layered ceramics while in contact with each other, thawing the frozen composite, and then firing the thawed composite.

2. The composite ceramic material of claim 1, modified in that in the perparation thereof there are added lithium ions to each different ceramic material to obtain small ice crystals instead of supercooling said layers.

**Patentansprüche**

1. Keramisches Verbundmaterial, das sich zusammensetzt aus einem Laminat von mindestens zwei verschieden gebrannten keramischen Elementen, wobei das Material mindestens eines keramischen Elementes einen Expansionskoeffizienten aufweist, der sich von dem Material mindestens eines weiteren Elementes unterscheidet, dadurch gekennzeichnet, dass jedes keramische Element ein ausreichendes Volumen der Zwischenräume besitzt, um die Ausdehnung der einzelnen keramischen Teilchen, die dieses Element bilden, in Übereinstimmung mit seinem eigenen Expansionskoeffizienten zu gewährleisten, wobei das genannte keramische Verbundmaterial in einer einzigen Form hergestellt wird, indem man die verchiedenen keramischen Elemente, die sich aus einem keramischen Material und einem gefrierempfind-lichen kolloiden keramischen Sol zusammen-setzen, in die Form in schichtmässiger Anordnung und in Kontakt mit einander einsetzt, die jeweiligen Schichten unterkühlt und die schichtmässig angeordneten Keramiken, die in Kontakt miteinander sind, gefriert, den gefrorenen Verbund auftaut, und dann den aufgetauten Verbund brennt.

2. Keramisches Verbundmaterial ·nach Anspruch 1, das dadurch modifiziert ist, dass man bei der Herstellung desselben anstelle einer Unterkühlung der genannten Schichten zu jedem unterschiedlichen Keramikmaterial Lithiumionen zugibt, um kleine Eiskristalle zu erhalten.

**Revendications**

1. Matériau céramique composite composé d'un stratifié d'au moins deux différents corps céramiques cuits, dans lequel au moins un matériau de corps céramique possède un coefficient d'expansion différent de celui du matériau d'au moins un autre corps, caractérisé en ce que chaque corps céramique a un volume vide suffisant pour permettre l'expansion des particules individuelles céramiques constituant un tel corps selon son propre coefficient d'expansion, ledit matériau céramique composite étant fabriqué dans un seul moule par insertion des différents corps céramiques, qui sont composés d'un matériau céramique et d'un sol céramique colloîdal sensible au gel, dans le moule, en couches et en contact l'un avec l'autre, par surfusion des couches respectives, et par congélation des céramiques en couches alors qu'elles sont en countact l'une avec l'autre, par dégel du composite congelé, et par cuisson ultérieure du composite dégelé.

2. Materiau céramique composite selon la revendication 1, modifié en ce que dans sa préparation, on ajoute des ions lithium à chaque matériau céramique différent pour obtenir des petits cristaux de glace, au lieu d'opérer la surfusion desdites couches.